# EUROPÄISCHE PATENTSCHRIFT

(11) **EP 2 957 416 B1**
(45) Veröffentlichungstag und Bekanntmachung des Hinweises auf die Patenterteilung: **11.10.2017**
(21) Anmeldenummer: 15170975.5
(22) Anmeldetag: 08.06.2015
(51) Int. Cl.: B29C 63/02, B32B 41/00, B32B 37/22

(54) **VERFAHREN UND VORRICHTUNG ZUM UMMANTELN STRANGFÖRMIGER WERKSTÜCKE IN VARIABLEN LOSGRÖSSEN**
METHOD AND DEVICE FOR COATING STRING-FORM WORKPIECES IN VARIABLE BATCH SIZES
PROCEDE ET DISPOSITIF D'ENROBAGE DE PIECES USINEES EN FORME DE TIGE DANS DES SERIES DE TAILLE VARIABLE

(30) Priorität: 10.06.2014 DE 102014211020
(43) Veröffentlichungstag der Anmeldung: 23.12.2015
(73) Patentinhaber: Friz Kaschiertechnik GmbH, 74189 Weinsberg (DE)
(72) Erfinder: Gitt, Vitali, 74743 Seckach (DE); Häfele, Thomas, 74182 Obersulm (DE)
(74) Vertreter: Hoffmann Eitle

(56) Entgegenhaltungen:
- WO-A2-00/10788
- DE-A1-102004 056 540
- JP-A- H06 156 339

## Beschreibung

### Technisches Gebiet

Die vorliegende Erfindung betrifft ein Verfahren und eine Vorrichtung zum Ummanteln strangförmiger Werkstücke mit einem Beschichtungsmaterial. Diese Erfindung findet Anwendung in der Bauelemente-, Möbel- und Fensterindustrie.

### Stand der Technik

Aus dem Stand der Technik sind Vorrichtungen zur Ummantelung von strangförmigen Werkstücken mit einem Beschichtungsmaterial im Durchlaufverfahren bekannt.

Dabei wird ein Werkstück mittels einer Transportvorrichtung durch eine Aneinanderreihung von speziellen Vorrichtungen transportiert und eine technologisch sinnvolle Reihenfolge der Bearbeitung des Werkstücks eingehalten.

Führungselemente entlang der Transportstrecke sichern dabei die Lagestabilität der strangförmigen Werkstücke und geeignete Druckelemente sichern die für den Transport notwendigen Friktionskräfte zwischen Transportvorrichtung und Werkstück.

Die strangförmigen Werkstücke werden in einer ersten Bearbeitungsstufe, in Abhängigkeit von ihren chemischen und physikalischen Eigenschaften, durch geeignete Maßnahmen wie Bürsten, Abblasen, Abwaschen, Primern und/oder Erwärmen auf die nachfolgende Bearbeitung vorbereitet. Für den Beschichtungsprozess wird ein Beschichtungsmaterial in gerollter Form über eine Abwickelvorrichtung zugeführt. Das bahnförmige Beschichtungsmaterial wird mittels Walzen und Rollen gegen das durchlaufende Werkstück gepresst. Der dabei auftretende Zug sorgt für das stetige Abrollen der gewickelten Materialbahn. Die Materialbahn wird vor dem Kontakt mit dem Werkstück durch eine Leimauftragsvorrichtung rückseitig mit einem reaktiven Schmelzklebstoff beschichtet. Dieser Schmelzklebstoff behält über eine gewisse Zeit seine adhäsiven Eigenschaften. Innerhalb dieser Zeit muss die Verklebung mit dem Werkstück stattfinden. Die Eigenschaften des Schmelzklebstoffes lassen es zu, diese Zeit durch Zuführung von heißer Luft über Gebläse zu verlängern. In der nachfolgenden Ummantelungszone wird das Beschichtungsmaterial durch eine Vielzahl von Druck- und Formrollen an das Werkstück gepresst und mit diesem verklebt. Durch diesen kontinuierlich ablaufenden Prozess entsteht dabei ein endlos beschichteter Strang aus Werkstücken, der in einer nachfolgenden Vorrichtung wieder in separate Werkstücke vereinzelt werden muss. Hier wird deutlich, dass derartige Maschinen nur für die Produktion großer Stückzahlen geeignet sind.

Weiterhin sind Maschinen bekannt, die speziell für die Bearbeitung einzelner strangförmiger Werkstücke geeignet sind. Bei diesen Maschinen wird das Werkstück auf der Grundmaschine, einer statischen Trägerkonstruktion, aufgespannt. Alle notwendigen Bearbeitungsaggregate befinden sich auf einem parallel zum Werkstück verfahrbaren Portal. Dieses Portal wird dann entgegen der üblichen Transportrichtung über das Werkstück gefahren. Dabei wird das Beschichtungsmaterial abgerollt, die Rückseite mit Leim beschichtet und durch Druck- und Formrollen mit dem Werkstück verpresst. Diese Art von Maschinen ist nicht mehr für den zuvor beschriebenen Durchlaufprozess geeignet.

Ferner beschreibt die WO 00/10788 A2 eine Vorrichtung zum Kaschieren von plattenförmigen Werkstücken, deren Oberfläche bezogen auf eine Werkstücklängs L und Breitenrichtung B unterschiedlich orientierte Profilierungen P aufweist, mit einem flexiblen fixierfähigen Beschichtungsmaterial, umfassend eine Werkstück-Stützeinrichtung, die eine Stützebene E bildet, auf der die Werkstücke abgestützt bewegbar sind, eine Werkstück-Bewegungseinrichtung zum fortlaufenden Bewegen der Werkstücke in einer vorbestimmten Durchlaufrichtung D auf der Stützebene E, eine Beschichtungsmaterial-Zuführeinrichtung, und eine Beschichtungsmaterial-Auflegeeinrichtung zum Zuführen und Auflegen des Beschichtungsmaterials auf die zu beschichtende Oberfläche der fortlaufend bewegten Werkstücke, und eine Anpresseinrichtung zum Anpressen des Beschichtungsmaterials auf die zu beschichtende Oberfläche, wobei die Anpresseinrichtung mindestens ein während des Anpressvorgangs bewegbares Anpresselement besitzt, das wenigstens einen dem Beschichtungsmaterial und der zu beschichtenden Oberfläche zugeordneten elastischen Anpresskörper aufweist, der das Beschichtungsmaterial fortlaufend an die zu beschichtende Oberfläche und deren unterschiedlich orientierte Profilierungen P angeschmiegt, angedrückt und fixiert.

### Darstellung der Erfindung

Der Erfindung liegt die Aufgabe zugrunde, den Platzbedarf und Aufwand für den Maschinenpark zum Ummanteln strangförmiger Werkstücke unterschiedlicher Losgrößen zu minimieren.

Erfindungsgemäß wird diese Aufgabe durch eine Vorrichtung mit den Merkmalen von Patentanspruch 1 und ein Verfahren mit den Merkmalen von Patentanspruch 15 gelöst. Bevorzugte Ausführungsformen sind in den abhängigen Ansprüchen angegeben.

Durch die Erfindung werden zwei verschiedene Betriebsmodi ermöglicht, welche die Verarbeitung sowohl kleiner oder kleinster Losgrößen, in der Branche unter dem Stichwort "Stückzahl 1 - Fertigung" zusammengefasst, als auch mittlerer bis großer Losgrößen zulassen. Der zur Verarbeitung unterschiedlicher Losgrößen notwendige Platzbedarf für zwei einzelne, spezialisierte Maschinen kann damit verringert werden. Zudem können durch den Einsatz der erfindungsgemäßen Vorrichtung anstelle von zwei einzelnen, spezialisierten Maschinen die Investitions- und Betriebskosten reduziert werden. Potentielle Anwender der Erfindung sind kleine und mittlere Unternehmen.

Weiterhin ist die Vorrichtung so gestaltet, dass mit wenig Aufwand auf unterschiedliche Produktionsbedingungen reagiert werden kann. Die Erfindung ist für die Ummantelung von Holz- oder holzähnlichen Materialien genauso einsetzbar, wie für Werkstücke aus Kunststoff oder Metall. Besonders im Bereich der Produktentwicklung der Bauelemente-, Möbel- und Fensterindustrie werden derartige Maschinen nachgefragt. Ebenso ist eine Nachfrage nach solchen Maschinen aus dem Bereich Produktentwicklung der Hersteller von Beschichtungsmaterialien nachweisbar.

Die bevorzugten Ausführungsformen der Erfindung weisen weiterhin unter anderem die folgenden Funktionalitäten auf:
a) Beschichtung von strangförmigen Werkstücken im Durchlaufverfahren
b) Beschichtung von strangförmigen Werkstücken im Durchlaufverfahren aber mit variierbaren Längen der Einlaufzone vor dem Portal und der Ummantelungszone nach dem Portal durch die Möglichkeit des Verschiebens des Portals
c) Beschichtung von einzelnen strangförmigen Werkstücken im Stationärverfahren
d) Beschichtung von strangförmigen Werkstücken aus Metall oder Kunststoff im Durchlauf- oder Stationärverfahren durch Beistellen bekannter Einrichtungen zum Auftragen chemischer Mittel zur Oberflächenkonditionierung oder physikalisch eigenschaftenverändernder Methoden in oder vor der Einlaufzone
e) Beschichtung von strangförmigen Werkstücken mit bereits mit Haftmittel vorbeschichteten Beschichtungsmaterialien im Durchlauf- oder Stationärverfahren

Bevorzugt beinhaltet die erfindungsgemäße Vorrichtung eine Linearführung, auf der die Portalkonstruktion präzise geführt werden kann.

In einer weiteren Ausgestaltung der erfindungsgemäßen Vorrichtung wird die Portalkonstruktion auf der Linearführung durch einen Linearantrieb bewegt. Dieser erlaubt eine präzise Steuerung der Geschwindigkeit und damit auch der Synchronisation mit parallelen Prozessabläufen.

Mit Vorteil ist die Fördereinrichtung der erfindungsgemäßen Vorrichtung als Transportkette und/oder nacheinander angeordneten Transporträder ausgelegt. Damit kann die Vorrichtung flexibel an unterschiedliche Werkstücke angepasst werden.

Weiterhin sind gemäß einer bevorzugten Ausführungsform Druck- und Formrollen auf der Portalkonstruktion montiert. Diese stellen den notwendigen Anpressdruck zwischen Beschichtungsmaterial und Werkstück sicher.

Besonders bevorzugt ist eine erfindungsgemäße Vorrichtung mit mindestens einem weiteren montierten Werkzeug, Werkzeugmagazin und oder Werkzeughalter in der Einlaufzone und/oder in der, dem in diesem Anwendungsfall stationären Portal, nachfolgenden Ummantelungszone. Mit einer derartigen Ausführungsform kann besonders flexibel auf unterschiedliche Anforderungen hinsichtlich Vorbehandlung und Ummantelung unterschiedlicher Werkstücke reagiert werden.

Mit Vorteil sind gemäß einer weiteren Ausführungsform Einrichtungen zur Werkstückvorbereitung und Oberflächenkonditionierung für das Beschichten von Holz, holzähnlichen Werkstücken, Werkstücken aus Metall, Kunststoff oder kunststoffähnlichen Materialien vorgesehen, die ausgewechselt werden können. Damit kann die Vorrichtung flexibel an unterschiedliche Werkstückmaterialien angepasst werden.

Im Sinne der Erfindung sind unter strangförmigen Werkstücken insbesondere streifen- oder bandförmige Werkstücke zu verstehen, die auch eine in Längsrichtung profilierte Oberfläche aufweisen können. Ferner umfassen die Begriffe "Ummanteln" oder "Kaschieren" allgemein gleichwertig den Prozess des Beleimens einer Materialbahn und deren anschließendem Auftragen und Verpressen mit einem Trägerwerkstück im Durchlaufverfahren. Bei dem Beschichtungsmaterial kann es sich um Papiere, Folien, Laminate oder jedes andere, mit Haftmittel beschichtbare, streifenförmige, flexible Material handeln. Unter einer Ausgangsposition ist die Position zu verstehen, die das fahrbare Portal am Ende des Ummantelungsprozesses auf der Grundmaschine einnimmt. Unter einer Startposition ist die Position zu verstehen, die das fahrbare Portal zu Beginn des Ummantelungsprozesses einnimmt. Unter einem Durchlaufverfahren wird die Beschichtung eines durchlaufenden Werkstücks mit einem Beschichtungsmaterial verstanden. Unter einem Stationärverfahren wird die Beschichtung eines stehenden, auf einer definierten Position fixierten Werkstücks mit einem Beschichtungsmaterial verstanden. Unter einer Einlaufzone wird der Bereich der Vorrichtung verstanden, in dem die strangförmigen Werkstücke von der Transportvorrichtung aufgenommen werden, durch Führungselemente in ihrer Lage definiert werden und durch den Einbau bekannter Aggregate auf den nachfolgenden Bearbeitungsprozess vorbereitet werden. Unter einer Ummantelungszone wird der Bereich verstanden, in dem der tatsächliche Beschichtungsprozess stattfindet.

### Kurze Beschreibung der Figuren

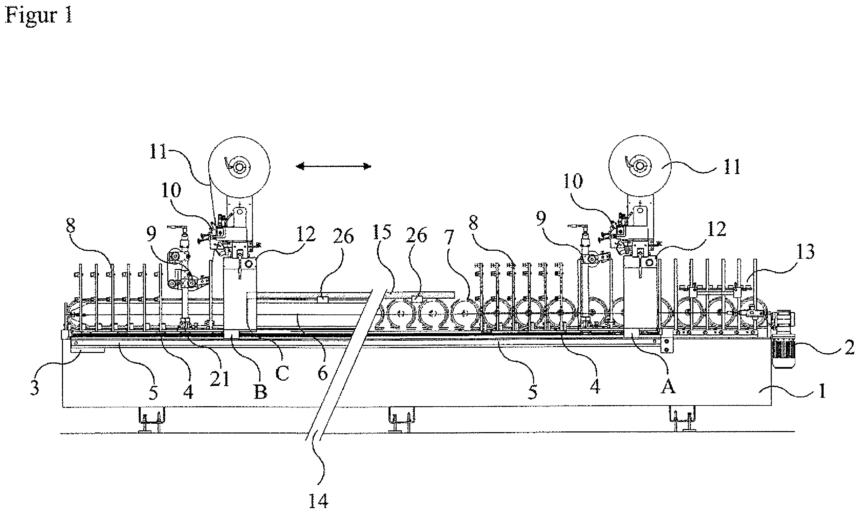

Figur 1 zeigt eine schematische Ansicht einer bevorzugten Ausführung der erfindungsgemäßen Gesamtvorrichtung. Die bewegliche Portalkonstruktion (12) ist in seinen beiden Endpositionen dargestellt. Die Darstellung der Maschine ist geteilt. Die Länge der Maschine ist abhängig von der Länge der zu beschichtenden Werkstücke. In dieser Figur sind zwei bevorzugte Ausführungen der Fördereinrichtung (6, 7) dargestellt. Mit welchem Fördersystem die Maschine ausgerüstet ist, richtet sich nach der Stabilität des strangförmigen Werkstücks (15), mit der es der Kraft der Druck- und Formrollen (8) beim Ummantelungsprozess entgegenwirken kann.
Figur 2 zeigt eine schematische 3D-Ansicht einer bevorzugten Anordnung der Trägerelemente (19), der Ankerleiste (16), der Arretiereinrichtung (17) der Grundplatten (18) sowie der Linearführungen (4) für die beidseitige Anordnung auf der Grundmaschine (1).
Figur 3 zeigt eine Stirnansicht einer bevorzugten Anordnung der Trägerelemente (19), der Arretiereinrichtung (17) der Grundplatten (18) und der Linearführung (4) der erfindungsgemäßen Vorrichtung für die beidseitige Anordnung auf der Grundmaschine (1) in variabler Breite (20).
Figur 4 zeigt eine Detailansicht einer beispielhaften Ausbildung der erfindungsgemäßen Vorrichtung in der Arbeitsphase des unmittelbaren Beginns der Beschichtung im Betriebsmodus "Stationärverfahren".
Figur 5 zeigt eine Darstellung einer Ausführungsform der erfindungsgemäßen Vorrichtung für die Beschichtung von strangförmigen Werkstücken im Durchlaufverfahren mit variierbaren Längen der Einlaufzone und der Ummantelungszone (8) durch die Möglichkeit des Verschiebens und definierten Fixierens der Portalkonstruktion (12).

### Ausführliche Beschreibung bevorzugter Ausführungsformen

In der nachfolgenden Beschreibung und in den Figuren werden zur Vermeidung von Wiederholungen gleiche Bauteile / Positionen mit gleichen Bezeichnungen gekennzeichnet, sofern keine notwendigen Differenzierungen erforderlich sind.

In Figur 1 sind zwei bevorzugte Ausführungsformen der erfindungsgemäßen Vorrichtung mit der Grundmaschine (1) dargestellt. Mit der ersten Ausführung der Fördereinrichtung (7) in Form von nacheinander angeordneten und von einem Motor (2) gemeinsam angetriebenen Transporträdern können Werkstücke (15) transportiert werden, die der Kraft der Druck- und Formrollen in der Ummantelungszone (8) beim Beschichtungsprozess einen ausreichenden Wiederstand entgegensetzen können. Dies ist insbesondere in den Bereichen zwischen den Auflagepunkten zwischen zwei Transporträdern notwendig. Eine zweite Ausführungsform mit Transportkette (6) kommt dann zum Einsatz, wenn die Werkstücke (15) eine geringere Höhe als ihre Breite aufweisen oder wenn ihre strukturelle Stabilität nicht ausreichend ist, um der Kraft der Druck- und Formrollen in der Ummantelungszone (8) ausreichend entgegenzuwirken. Die Transportkette (6) gewährleistet eine geschlossene Auflagefläche und vermeidet das Durchbiegen des Werkstücks (15) zwischen zwei Transporträdern. Die Transportkette (6) wird ebenso von einem Motor (2) angetrieben. Die Maschine ist in Figur 1 unterbrochen dargestellt, da die Gesamtlänge der Maschine abhängig ist von der Länge der zu beschichtenden Werkstücke. In der Einlaufzone werden mit Hilfe von Werkzeughaltern (13) bekannte Aggregate und Vorrichtungen zur Oberflächenkonditionierung, Reinigung, Führung und Vorwärmung der strangförmigen Werkstücke installiert. Entsprechend der erfindungsgemäßen Ausführung der Vorrichtung kann diese Zone je nach zu installierenden Aggregaten durch Verschieben der Portalkonstruktion (12) vergrößert oder wieder auf Standardmaß verkleinert werden. Die verschiebbare Portalkonstruktion (12) stellt den Kern der erfindungsgemäßen Vorrichtung dar. Die Portalkonstruktion (12) trägt das Leimauftragsaggregat (10), das Beschichtungsmaterial (11), die Kaschierstation (9) sowie die mitfahrende Ummantelungszone (8). Die fahrbare Portalkonstruktion (12) stützt sich beidseitig der Grundmaschine auf hochpräzisen Linearführungen (4) ab. Diese Linearführungen sind auf Trägerelementen (19) montiert. Die Schlitten der Linearführungen tragen je eine Grundplatte (18), die Teil der Portalkonstruktion (12) sind und auf der die genannten Aggregate (10), (8) sowie (9) aufgebaut sind. Die Portalkonstruktion (12) ist mit Hilfe der Transporteinrichtung (5), die mit einem elektromechanischen, pneumatischen oder hydraulischen Antrieb (3) ausgerüstet ist, über seinen gesamten Bewegungsbereich stufenlos verschiebbar. Die Portalkonstruktion (12) besitzt beidseitig Arretiereinrichtungen (17) mit denen das Portal in definierten Positionen auf einer Ankerleiste (16) fixiert werden kann. Dabei sind die Ankerpunkte auf der Ankerleiste (16) so angeordnet, dass die Kaschierwalze (9) dabei immer genau über dem Scheitelpunkt eines Transportrades der Fördereinrichtung (7) positioniert ist. Damit wird sichergestellt, dass in der Betriebsart Durchlaufbetrieb der Kaschierwalze (9) immer ein definierter Druck entgegen wirken kann. Für den Stationärbetrieb, also der Beschichtung einzelner strangförmiger Profile, ist die Portalkonstruktion (12) an der Kaschierwalze (9) mit einer zusätzlichen Umlenkrolle (25) ausgestattet. Eine darüber befindliche motorisch angetriebene Aufwickelvorrichtung (23) nimmt das Beschichtungsmaterial (11) auf. Zwischen Kaschierwalze (9) und Umlenkrolle (25) befindet sich ein Trennaggregat (24). Diese Aggregate (23, 24, 25) sind in der beschriebenen Ausführungsform an der Kaschierwalze montiert. Das Trennaggregat (24) ist so angeordnet und bewegt eine Klinge quer zum Beschichtungsmaterial (11) in der Art, dass die Klinge das Beschichtungsmaterial (11) durchtrennt ohne dabei das Werkstück (15) zu berühren.

Die Steuereinheit (27), nicht in den Figuren dargestellt, steuert die Vorrichtung in einer ersten Betriebsweise, dem Stationärverfahren, bevorzugt wie folgt an.

Das Verfahren zum Ummanteln von einzelnen, strangförmigen Werkstücken (15) mit einem bahnförmigen Beschichtungsmaterial (11), welches rückseitig mit einem Haftmittel versehen und zu einer zu beschichtenden Oberfläche des Werkstücks zugeführt und an die Oberfläche angepresst und verklebt wird, umfasst folgende Schritte:
a) Durch eine externe Kraft erzeugtes Bewegen der Portalkonstruktion (12) von der Ausgangsposition A zur Startposition B
b) Manuelles Einziehen der Materialbahn (11) vor das Leimauftragsaggregat (10), um die Kaschierwalze (9) und bis zur motorischen Aufwickeleinrichtung (23)
c) Einfahren des strangförmigen Werkstückes (15) über die Fördereinrichtung (6, 7) in die Maschine
   bis zu einer definierten Position
d) Start der Bewegung der Portalkonstruktion (12) von der Startposition B zurück zur Ausgangsposition A
e) Gleichzeitiger Start der Aufwickeleinrichtung (23) der Materialbahn (11) und Start der Rückbeschichtung der Materialbahn (11) in der Art, dass der Beginn der Haftmittelschicht mit dem Erreichen der Vorderkante des Werkstücks zusammenfällt (Kontaktpunkt C)
f) Im Zeitpunkt des Erreichens des Kontaktpunktes C wird die Kaschierwalze (9) durch die Vorrichtung (21) in die Arbeitsposition abgesenkt und die Portalkonstruktion (12) fährt in definierter und konstanter Geschwindigkeit zurück zum Ausgangspunkt A
g) Unmittelbar nach dem Zeitpunkt des Absenkens der Kaschierwalze (9) wird die Materialbahn (11) vor der Vorderkante des Werkstücks getrennt
h) Die auf dem gemeinsamen Schlitten angeordneten Druck- und Formrollen (8) übernehmen während dieser Bewegung das Anpressen der Materialbahn (11) an das Werkstück (15).

Im Schritt a) wird die Bewegung bevorzugt durch einen geeigneten mechanischen, hydraulischen oder pneumatischen Antrieb (3) erzeugt. Bedingung ist die Erzeugung einer gleichförmigen Bewegung mit einer definierten, steuerungstechnisch beeinflussbaren Geschwindigkeit. Im Schritt b) wird das Beschichtungsmaterial (11) in die Aufwickeleinrichtung (23) eingezogen. Das Beschichtungsmaterial (11) befindet sich in gerollter Form auf der Wickelwelle einer Abwickeleinrichtung. Die Materialbahn (11) wird manuell in die Aufwickeleinrichtung (23) eingezogen. In den Schritten c) bis g) müssen alle Vorgänge und Bewegungen aller beteiligten Einrichtungen so synchronisiert werden, dass der Startpunkt der Rückbeschichtung der Materialbahn mit dem Haftmittel und die Position der Vorderkante des bereitliegenden Werkstücks exakt aufeinander zu liegen kommen. Eine Positionierung des Startpunktes der Rückbeschichtung nach der Vorderkante, das heißt auf dem Werkstück, ist dabei zwingend zu vermeiden. Eine Positionierung dieses Punktes vor der Vorderkante, das heißt wenige Millimeter vor dem Werkstück, ist zu tolerieren.

Im Punkt h) fährt die Portalkonstruktion (12) in einer exakt definierten, steuerungstechnisch beeinflussbaren Geschwindigkeit über das Werkstück (15), bis die Ausgangsposition A wieder erreicht ist. Nach dem Stillstand des Portals wird das Beschichtungsmaterial (11) nach der Hinterkante des Werkstücks manuell getrennt. Das Werkstück (15) wird danach aus der Maschine (1) ausgefahren.

Weiterhin sind beim Betreiben der erfindungsgemäßen Vorrichtung im Stationärbetrieb vorzugsweise die folgenden Prozessschritte einzuhalten.

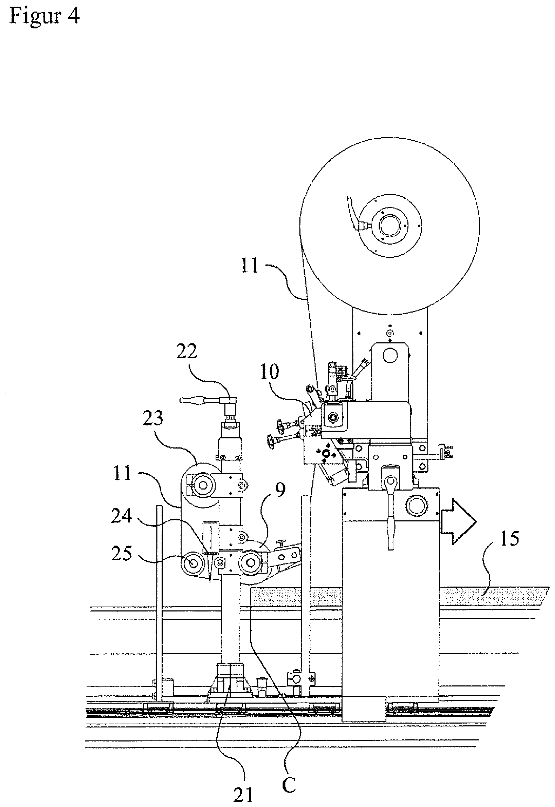

Die Portalkonstruktion (12) bewegt sich zunächst vom Ausganspunkt A zum Startpunkt B. Kurzhubzylinder (21) auf beiden Seiten der Höhenverstellung (22) heben die Kaschierwalze (9) dabei um wenige Millimeter an. Nachdem die Portalkonstruktion (12) an Punkt B zum Stillstand gekommen ist, wird das Beschichtungsmaterial (11) wie in Figur 4 gezeigt in das Leimauftragsaggregat (10) eingezogen und an der Aufwickeleinrichtung (23) festgeklemmt. Kaschierwalze (9), Trennaggregat (24), Umlenkrolle (25) und Aufwickeleinrichtung (23) befinden sich in einem gemeinsamen, höhenverstellbaren Halterahmen, so dass sich der Abstand zwischen diesen Aggregaten und deren Position zueinander, unabhängig der eingestellten Arbeitshöhe (Dicke der Werkstücke 15) nicht verändern kann. Die Kurzhubzylinder (21) senken die Kaschiereinrichtung (9, 25, 24, 23, 22) ab. Mit der Höhenverstellung (22) kann nun die Kaschierwalze (9) auf die exakte Höhe für den nachfolgenden Beschichtungsprozess eingestellt werden. Anschließend heben die Kurzhubzylinder (21) die Kaschiervorrichtung wieder um wenige Millimeter an. Das einlaufende Werkstück (15) wird an einer exakt bestimmten Stelle gestoppt und durch eine Klemmeinrichtung (26) festgeklemmt. Diese Klemmeinrichtung (26) kann mechanischer, pneumatischer, elektromagnetischer oder hydraulischer Funktionsart sein. Sie stellt sicher, dass das strangförmige Einzelwerkstück (15) während der Beschichtung seine Lage nicht ändern kann. Der Beginn der Bewegung der Portalkonstruktion (12) löst mehrere, gleichzeitig ablaufende Funktionen aus.
a) Die Aufwickeleinrichtung (23) wickelt mit einer exakt auf die Vorschubgeschwindigkeit der Portalkonstruktion (12) berechneten Geschwindigkeit das Beschichtungsmaterial (11) auf.
b) Das Leimauftragsaggregat (10) startet die Beschichtung der Materialbahn mit Haftmittel
c) Die Vorschubgeschwindigkeit der Portalkonstruktion (12) und die Geschwindigkeit der Aufwickeleinrichtung (23) sind steuerungstechnisch so aufeinander abgestimmt, dass der Beginn der Haftmittelschicht auf der Rückseite des Beschichtungsmaterials (11) exakt mit der Vorderkante des Werkstücks (15) im Punkt C übereinstimmt.
d) Exakt bei Erreichen des Punktes C setzen die Kurzhubzylinder (21) die Kaschiervorrichtung (9) exakt auf die eingestellte Arbeitshöhe ein
e) Exakt bei Erreichen des Punktes C trennt das Trennaggregat (24) das Beschichtungsmaterial (11) vor der Vorderkante des Werkstücks (15) ab. f) Die Aufwickeleinrichtung (23) wickelt den Rest der Materialbahn (11) auf und stoppt danach.

Die Portalkonstruktion (12) bewegt sich weiter in Richtung Ausgangspunkt A in der Art, dass die Druck- und Formrollen in der Ummantelungszone (8) in konstanter Geschwindigkeit das Beschichtungsmaterial (11) formgenau mit dem strangförmigen Werkstück (15) verpressen. Dabei muss die Länge der Maschine so gestaltet sein, dass im Ausgangspunkt A die letzte Druck- oder Formrolle in der Ummantelungszone (8) die Hinterkante des Werkstücks (15) passiert hat. Das Leimauftragsaggregat (10) setzt mit der Rückbeschichtung programmgesteuert in der Art aus, dass das Ende der Haftmittelschicht exakt mit der Hinterkante des Werkstücks (15) zusammenfällt. Nachdem die Portalkonstruktion (12) im Ausgangspunkt A gestoppt hat, kann das Beschichtungsmaterial (11) an der Hinterkante des Werkstücks (15) und vor den Leimauftragsaggregat (10) getrennt und aus der Maschine entfernt werden. Die Klemmeinrichtung (26) öffnet sich und das fertig beschichtete Werkstück (15) kann entnommen oder mit Hilfe der Fördereinrichtung (6, 7) an die nächste Maschine übergeben werden.

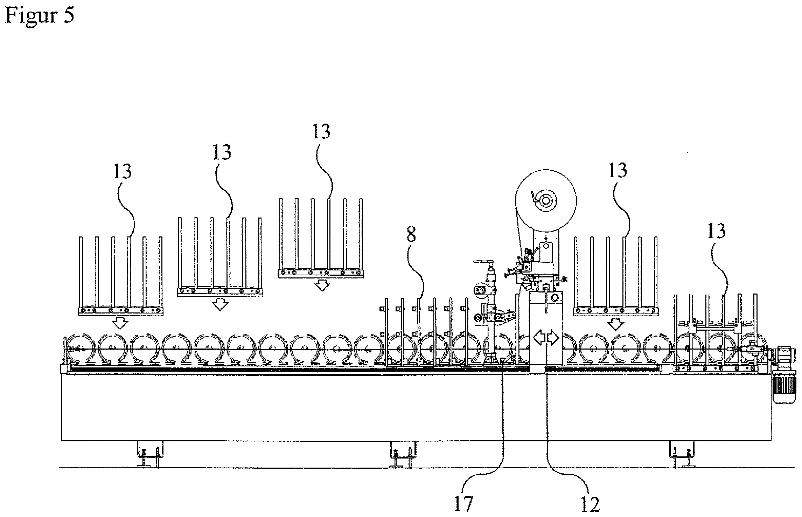

In der Figur 5 ist eine weitere beispielhafte Ausführung mit einer Fördereinrichtung 7 dargestellt. Mittels Steuereinheit (27) werden dabei in einer zweiten Betriebsweise, auch Durchlaufverfahren genannt, die Werkstücke (15) relativ zur Portalkonstruktion (12) verfahren. Hierzu werden zunächst durch das Verschieben der Portalkonstruktion (12) die Platzverhältnisse in der Einlaufzone und der Ummantelungszone den Produktionsbedingungen angepasst. Die Portalkonstruktion (12) wird an der Arretiereinrichtung (17) entriegelt und bis zur gewünschten Position verschoben. Auf beidseitig montierten Ankerleisten (16) sind feste Ankerpositionen vorgesehen. Diese Ankerpositionen sind so eingerichtet, dass die Kaschierwalze (9) immer genau über dem Scheitelpunkt eines Transportrades der Fördereinrichtung 7 positioniert ist. Die Arretiereinrichtung (17) rastet über einer solchen Ankerposition ein und fixiert somit die Portalkonstruktion (12). Entsprechend der veränderten Platzverhältnisse in der Einlauf- und Ummantelungszone können nun Werkzeughalter (13) auf- oder abgebaut werden. Die kurze Ummantelungszone 8, die sich mit auf der verfahrbaren Portalkonstruktion (12) befindet, behält dabei ihre Funktion. Der Ummantelungsprozess findet nun im Durchlaufverfahren statt.

Die strangförmigen Werkstücke (15) werden zunächst in einer ersten Bearbeitungsstufe, in Abhängigkeit von ihren chemischen und physikalischen Eigenschaften, durch geeignete Maßnahmen wie Bürsten, Abblasen, Abwaschen, Primern und/oder Erwärmen auf die nachfolgende Bearbeitung vorbereitet. Für den Beschichtungsprozess wird das Beschichtungsmaterial (11) in gerollter Form über eine Abwickeleinrichtung zugeführt. Das bahnförmige Beschichtungsmaterial (11) wird mittels Druck- und Formrollen in der Ummantelungszone (8) gegen das durchlaufende Werkstück (15) gepresst. Der dabei auftretende Zug sorgt für das stetige Abrollen der gewickelten Materialbahn (11). Die Materialbahn (11) wird vor dem Kontakt mit dem Werkstück (15) durch ein Leimauftragsaggregat (10) rückseitig mit einem reaktiven Schmelzklebstoff beschichtet. Dieser Schmelzklebstoff behält über eine gewisse Zeit seine adhäsiven Eigenschaften. Innerhalb dieser Zeit muss die Verklebung mit dem Werkstück (15) stattfinden. Die Eigenschaften des Schmelzklebstoffes lassen es zu, diese Zeit durch Zuführung von heißer Luft über Gebläse zu verlängern. In der Ummantelungszone (8) wird das Beschichtungsmaterial (11) durch eine Vielzahl von Druck- und Formrollen an das Werkstück gepresst und mit diesem verklebt. Durch diesen kontinuierlich ablaufenden Prozess entsteht dabei ein endlos beschichteter Strang aus Werkstücken, der in einer nachfolgenden Vorrichtung wieder in separate Werkstücke vereinzelt wird.

### Bezugszeichenliste

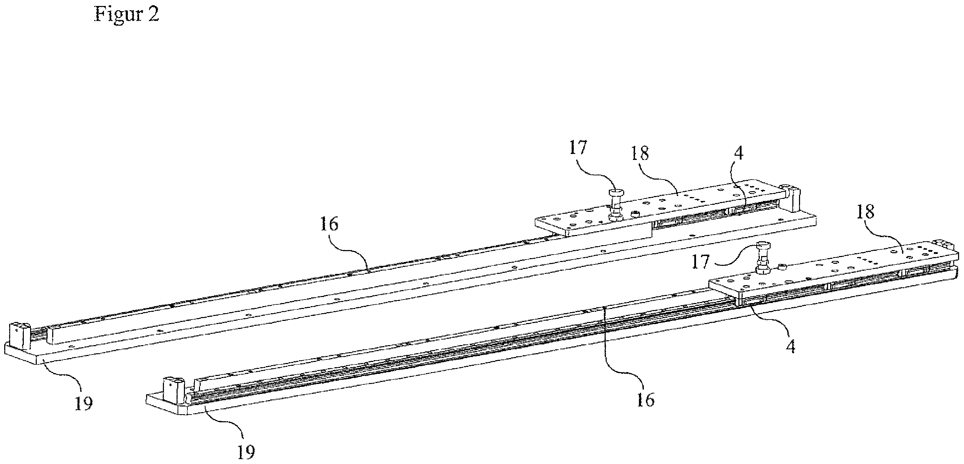

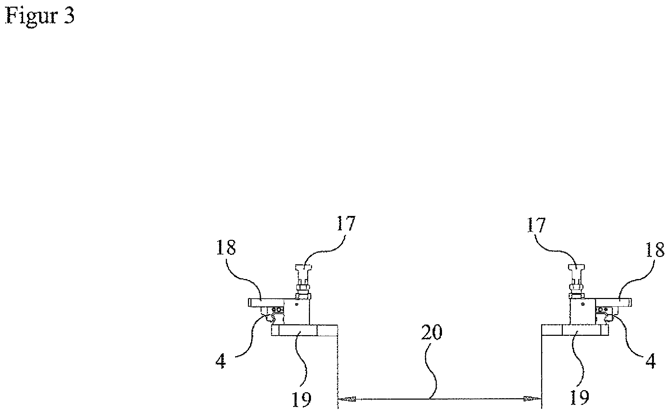

1 Grundmaschine (Figur 1)
2 Antrieb der Fördereinrichtung 6 oder 7 (Figur 1)
3 Antrieb der Transporteinrichtung für die Bewegung der Portalkonstruktion 12 (Figur 1)
4 Linearführung (Figur 1, 2 & 3)
5 Transporteinrichtung für die Bewegung der Portalkonstruktion 12 (Figur 1)
6 Fördereinrichtung, Ausführung Transportkette (Figur 1)
7 Fördereinrichtung, Ausführung Transporträder (Figur 1)
8 Ummantelungszone auf Grundplatte 18 (Figur 1, 5)
9 Kaschierwalze (Figur 1 & 4)
10 Leimauftragsaggregat (Figur 1 & 4)
11 Beschichtungsmaterial (Figur 1 & 4)
12 Portalkonstruktion auf Grundplatte 18, beidseitig (Figur 1)
13 Werkzeughalter, beidseitig (Figur 1 & 5)
14 optische Trennung zur Darstellung variabler Längen (Figur 1)
15 strangförmiges Werkstück (Figur 1 & 4)
16 Ankerleiste mit definierten Ankerpositionen für die Portalkonstruktion 12, beidseitig (Figur 2)
17 Arretiereinrichtung, beidseitig (Figur 2, 3 & 5)
18 Grundplatte der Portalkonstruktion für die Montage der Positionen 9, 10 und 8, beidseitig (Figur 2 & 3)
19 Trägerelement, beidseitig (Figur 2 & 3)
20 variabler Abstand der Trägerelemente (Figur 2)
21 Kurzhubzylinder zum Anheben und Absenken der Kaschiereinrichtung 9 (Figur 1 & 4)
22 Höhenverstellung für die Kaschiereinrichtung 9 (Figur 4)
23 angetriebene Aufwickeleinrichtung für das Beschichtungsmaterial 11 (Figur 4)
24 Trenneinrichtung, Ziehklinge (Figur 4)
25 Umlenkrolle, Abstandshalter für Trenneinrichtung (Figur 4)
26 Klemmeinrichtung für Werkstück 15 (Figur 1)
27 Steuereinheit
A Ausgangsposition (Figur 1)
B Startposition (Figur 1)
C Kontaktpunkt (Figur 1)

## Patentansprüche

1. Vorrichtung zum Beschichten langgestreckter, strangförmiger Werkstücke (15) mit
mindestens einem Beschichtungsmaterial (11), mit
einer Beschichtungseinheit (8, 9, 10) zum Beschichten der Werkstücke,
einer verfahrbaren Portal- oder Auslegerkonstruktion (12), an der mindestens eine Beschichtungseinheit (8, 9, 10) montiert ist,
einer Transporteinrichtung (3, 5) zum Verfahren der Portal- oder Auslegerkonstruktion (12),
einer Fördereinrichtung (6, 7) zum Transportieren der Werkstücke (15),
und
einer Steuereinheit (27) zum Steuern der Beschichtungseinheit (8, 9, 10), der Portal- oder Auslegerkonstruktion (12), der Fördereinrichtung (6, 7) und der Transporteinrichtung (3, 5), wobei
die Steuereinheit (27) eingerichtet ist, in einer ersten Betriebsweise, auch Stationärbetrieb genannt, die Portal- oder Auslegerkonstruktion (12) mittels der Transporteinrichtung (3, 5) relativ zum Werkstück (15) zu verfahren und in einer zweiten Betriebsweise das Werkstück mittels der Fördereinrichtung (6, 7) relativ zur Portal- oder Auslegerkonstruktion (12) zu verfahren, **dadurch gekennzeichnet, dass**
eine Klemmeinrichtung (26) vorgesehen ist, die im Stationärbetrieb das Werkstück (15) an einer vorbestimmten Position fixiert.

2. Vorrichtung nach Anspruch 1, **dadurch gekennzeichnet, dass** die Portal- oder Auslegerkonstruktion (12) mindestens eine Grundplatte (18) aufweist, die durch mindestens eine parallel zur Fördereinrichtung (6, 7) montierte Linearführung (4) gelagert und geführt wird.

3. Vorrichtung nach Anspruch 1 oder 2, **dadurch gekennzeichnet, dass** die Portal- oder Auslegerkonstruktion (12) einen Linearantrieb als Teil der Transporteinrichtung (3, 5) aufweist, der die Portal- oder Auslegerkonstruktion (12) parallel zur Fördereinrichtung (6, 7) bewegt.

4. Vorrichtung nach einem der vorhergehenden Ansprüche, **dadurch gekennzeichnet, dass** die Fördereinrichtung eine Transportkette (6) und/oder nacheinander angeordnete Transporträder (7) sowie einen Motorantrieb (2) aufweist.

5. Vorrichtung nach einem der vorhergehenden Ansprüche, **dadurch gekennzeichnet, dass** auf der Portal- oder Auslegerkonstruktion (12) Form- und Druckrollen montiert sind, die die Ummantelungszone (8) bilden.

6. Vorrichtung nach einem der vorhergehenden Ansprüche, **dadurch gekennzeichnet, dass** mindestens ein weiteres Werkzeug,
Werkzeugmagazin und/oder Werkzeughalter (13) auf der, der Portal- oder Auslegerkonstruktion (12) nachfolgenden, stationären Ummantelungszone und/oder in der Einlaufzone montiert ist.

7. Vorrichtung nach einem der vorhergehenden Ansprüche, **dadurch gekennzeichnet, dass** sie Einrichtungen zur Werkstückvorbereitung und Oberflächenkonditionierung für das Beschichten von Holz, holzähnlichen Werkstücken, Werkstücken aus Metall, Kunststoff oder kunststoffähnlichen Materialien aufweist und diese ausgewechselt werden können.

8. Vorrichtung nach einem der vorhergehenden Ansprüche, **dadurch gekennzeichnet, dass** die Linearführungen (4) und Grundplatten (18) auf Trägerelementen (19) befestigt sind, die derart angeordnet sind, dass die Arbeitsbreite (20) der Grundmaschine (1) variierbar ist.

9. Vorrichtung nach einem der vorhergehenden Ansprüche, **dadurch gekennzeichnet, dass** ein Halterahmen an der Portal- oder Auslegerkonstruktion (12) montiert ist, der die Position verschiedener Beschichtungsaggregate (9, 23, 24, 25) zueinander fixiert und durch eine Höhenverstellung (22) im Abstand zum Werkstück (15) verstellbar ist.

10. Vorrichtung nach einem der vorhergehenden Ansprüche, **dadurch gekennzeichnet, dass** eine Einrichtung, bestehend aus Aufwickeleinrichtung (23), Umlenkrolle (25) und Kaschierwalze (9), auf der Portal- oder Auslegerkonstruktion (12) montiert ist, die im Stationärbetrieb eine Bahnspannung im Beschichtungsmaterial (11) erzeugt.

11. Vorrichtung nach einem der vorhergehenden Ansprüche, **dadurch gekennzeichnet, dass** eine Trenneinrichtung (24) auf der Portal- oder Auslegerkonstruktion (12) montiert ist, die das Beschichtungsmaterial (11) im Stationärbetrieb bei Erreichen des Kontaktpunktes C unmittelbar vor der Vorderkante des Werkstücks (15) durchtrennt.

12. Vorrichtung nach einem der vorhergehenden Ansprüche, **dadurch gekennzeichnet, dass** sie mindestens eine Ankerleiste (16) sowie mehrere festgelegte Ankerpunkte und Arretiereinrichtungen (17) aufweist, mit denen die Portal- oder Auslegerkonstruktion (12) im Durchlaufverfahren in einer der zugelassenen Positionen auf der Ankerleiste (16) gesichert wird und Einlaufzone und Ummantelungszone (8) damit in ihrer Längenausdehnung variiert werden, wobei die Ankerpunkte auf der Ankerleiste (16) bevorzugt so angeordnet sind, dass die Rotationsachse der Kaschierwalze (9) dabei immer senkrecht über der Rotationsachse eines Transportrades der Fördereinrichtung (7) positioniert ist.

13. Verfahren zum Beschichten langgestreckter, strangförmiger Werkstücke (15) mit mindestens einem Beschichtungsmaterial (11), **dadurch gekennzeichnet, dass**
für mindestens ein Werkstück eine Relativbewegung zwischen Werkstück (15) und mindestens einer Beschichtungseinheit (8, 9, 10) durch mindestens eine mittels einer Transporteinrichtung (3, 5) relativ zum Werkstück (15) verfahrbare Portal- oder Auslegerkonstruktion (12) realisiert wird, an der mindestens eine Beschichtungseinheit (8, 9, 10) montiert ist, auch Stationärbetrieb genannt, und
für mindestens ein zweites Werkstück die Relativbewegung zwischen einem stehenden, auf einer definierten Position fixierten Werkstück (15) und mindestens einer Beschichtungseinheit (8, 9, 10) durch eine Fördereinrichtung (6, 7) realisiert wird, die das Werkstück relativ zur Beschichtungseinheit (8, 9, 10) verfährt, auch Durchlaufbetrieb genannt, wobei das Verfahren auf einer Vorrichtung nach einem der Ansprüche 1 bis 12 durchgeführt wird.

14. Verfahren nach Anspruch 13, **dadurch gekennzeichnet,**
**dass** das Auftragen des Haftmittels auf das Beschichtungsmaterial (11) und / oder die Zusammenführung des Beschichtungsmaterials (11) und der Oberfläche eines Werkstücks (15) derart gesteuert werden, dass der Beginn der Haftmittelschicht auf dem Beschichtungsmaterial und das Erreichen des Kontaktpunktes C, an dem sich der Anfang der zu beschichtenden Oberfläche des Werkstücks (15) befindet, zusammenfallen und/oder dass zum Transport des Beschichtungsmaterials (11) zur zu beschichtenden Oberfläche eine Vorspannung erzeugt wird.

## Claims

1. Device for coating elongated, strand-like workpieces (15) with at least one coating material (11), having
a coating unit (8, 9, 10) for coating the workpieces,
a movable gantry or boom construction (12), on which at least one coating unit (8, 9, 10) is mounted,
a transport device (3, 5) for moving the gantry or boom construction (12),
a conveying device (6, 7) for transporting the workpieces (15), and
a control unit (27) for controlling the coating unit (8, 9, 10), the gantry or boom construction (12), the conveying device (6, 7) and the transport device (3, 5), wherein the control unit (27) is equipped, in a first operating mode, also called stationary operation, to move the gantry or boom construction (12) by means of the transport device (3, 5) relative to the workpiece (15) and in a second operating mode to move the workpiece by means of the conveying device (6, 7) relative to the gantry or boom construction (12), **characterised in that**
a clamping device (26) is provided which in stationary operation fixes the workpiece (15) at a pre-determined position.

2. Device according to claim 1, **characterised in that** the gantry or boom construction (12) has at least one base plate (18) which is supported and guided by at least one linear guide (4) mounted parallel to the conveying device (6, 7).

3. Device according to claim 1 or 2, **characterised in that** the gantry or boom construction (12) has a linear drive as part of the transport device (3, 5) which moves the gantry or boom construction (12) parallel to the conveying device (6, 7).

4. Device according to one of the preceding claims, **characterised in that** the conveying device has a transport chain (6) and/or transport wheels (7) arranged one after another and a motor drive (2).

5. Device according to one of the preceding claims, **characterised in that** shaping rollers and pressure rollers, which form the covering zone (8), are mounted on the gantry or boom construction (12).

6. Device according to one of the preceding claims, **characterised in that** at least one further tool, tool magazine and/or tool holder (13) is mounted on the stationary covering zone following the gantry or boom construction (12) and/or in the intake zone.

7. Device according to one of the preceding claims, **characterised in that** it has devices for workpiece preparation and surface conditioning for the coating of wood, wood-like workpieces, workpieces made of metal, plastic or plastic-like materials and the latter may be exchanged.

8. Device according to one of the preceding claims, **characterised in that** the linear guides (4) and base plates (18) are attached to support elements (19) which are arranged such that the working width (20) of the base machine (1) can be varied.

9. Device according to one of the preceding claims, **characterised in that** a carrier frame is mounted on the gantry or boom construction (12) which fixes the position of various coating units (9, 23, 24, 25) with respect to one another and can be adjusted by height adjustment (22) at a distance from the workpiece (15).

10. Device according to one of the preceding claims, **characterised in that** a device, consisting of winding device (23), deflection roller (25) and laminating roller (9), is mounted on the gantry or boom construction (12) which generates a web tension in the coating material (11) in stationary operation.

11. Device according to one of the preceding claims, **characterised in that** a separating device (24) is mounted on the gantry or boom construction (12) which cuts through the coating material (11) in stationary operation on reaching contact point C immediately in front of the leading edge of the workpiece (15).

12. Device according to one of the preceding claims, **characterised in that** it has at least one anchor strip (16) and several fixed anchor points and locking devices (17), with which the gantry or boom construction (12) is secured in one of the permitted positions on the anchor strip (16) in continuous operation and intake zone and covering zone (8) are thus varied as regards their linear extension, wherein the anchor points are arranged on the anchor strip (16) preferably so that the axis of rotation of the laminating roller (9) is thus always positioned vertically above the axis of rotation of a transport wheel of the conveying device (7).

13. Method for coating elongated, strand-like workpieces (15) with at least one coating material (11), **characterised in that**
for at least one workpiece, a relative movement between workpiece (15) and at least one coating unit (8, 9, 10) is realised by at least one gantry or boom construction (12) which can be moved by means of a transport device (3, 5) relative to the workpiece (15) and on which at least one coating unit (8, 9, 10) is mounted, also called stationary operation, and
for at least a second workpiece, the relative movement between a standing workpiece (15) fixed at a defined position and at least one coating unit (8, 9, 10) is realised by a conveying device (6, 7) which moves the workpiece relative to the coating unit (8,9. 10), also called continuous operation, wherein the method is carried out on a device according to one of claims 1 to 12.

14. Method according to claim 13, **characterised in that** the application of the adhesive to the coating material (11) and/or the bringing together of the coating material (11) and the surface of a workpiece (15) are controlled such that the start of the adhesive layer on the coating material and the reaching of contact point C, at which the beginning of the surface of the workpiece (15) to be coated is located, coincide and/or **in that** to transport the coating material (11) to the surface to be coated, pretension is generated.

## Revendications

1. Dispositif de revêtement de pièces (15), allongées en forme de barres, avec au moins un matériau de revêtement (11), avec
- une unité de revêtement (8, 9, 10) destiné au revêtement des pièces,
- une construction en portique ou en console (12) déplaçable, sur laquelle au moins une unité de revêtement (8, 9, 10) est montée,
- un dispositif de déplacement (3, 5) destiné au déplacement de la construction en portique ou en console (12),
- un dispositif de transport (6, 7) destiné au transport des pièces (15) et
- une unité de commande (27) destinée à la commande de l'unité de revêtement (8, 9, 10), de la construction en portique ou en console (12), du dispositif de transport (6, 7) et du dispositif de déplacement (3, 5),
dans lequel l'unité de commande (27) est conçue pour, dans un premier mode de fonctionnement, aussi appelé mode de fonctionnement stationnaire, déplacer la construction en portique ou en console (12) par rapport à la pièce (15) au moyen du dispositif de déplacement (3, 5) et, dans un deuxième mode de fonctionnement, déplacer la pièce par rapport à la construction en portique ou en console (12) au moyen du dispositif de transport (6, 7),
**caractérisé en ce qu'**il est prévu un dispositif de serrage (26) qui, dans le mode de fonctionnement stationnaire, fixe la pièce (15) dans une position prédéterminée.

2. Dispositif selon la revendication 1, **caractérisé en ce que** la construction en portique ou en console (12) comporte au moins une plaque de base (18) qui est montée et guidée par au moins un guide linéaire (4) monté parallèlement au dispositif de transport (6, 7).

3. Dispositif selon la revendication 1 ou 2, **caractérisé en ce que** la construction en portique ou en console (12) comporte un dispositif d'entraînement linéaire en tant que partie du dispositif de déplacement (3, 5), qui déplace la construction en portique ou en console (12) parallèlement au dispositif de transport (6, 7).

4. Dispositif selon l'une quelconque des revendications précédentes, **caractérisé en ce que** le dispositif de transport comporte une chaîne transporteuse (6) et/ou des roues transporteuses (7) agencées les unes derrière les autres ainsi qu'un dispositif d'entraînement moteur (2).

5. Dispositif selon l'une quelconque des revendications précédentes, **caractérisé en ce que** des galets de mise en forme et de pression qui forment la zone d'enveloppement (8) sont montés sur la construction en portique ou en console (12).

6. Dispositif selon l'une quelconque des revendications précédentes, **caractérisé en ce qu'**au moins un autre outil, un magasin d'outil et/ou un support d'outil (13), est ou sont montés sur la zone d'enveloppement stationnaire, qui suit la construction en portique ou en console (12), et/ou dans la zone d'admission.

7. Dispositif selon l'une quelconque des revendications précédentes, **caractérisé en ce qu'**il comporte des dispositifs destinés à la préparation de pièces et au conditionnement de surfaces en vue du revêtement de bois, de pièces semblables au bois, de pièces en métal, en matière plastique ou en matériaux semblables à la matière plastique et **en ce que** lesdits dispositifs peuvent être échangés.

8. Dispositif selon l'une quelconque des revendications précédentes, **caractérisé en ce que** les guides linéaires (4) et les plaques de base (18) sont fixés sur des éléments porteurs (19) qui sont agencés de telle sorte que la largeur de travail (20) de la machine de base (1) soit variable.

9. Dispositif selon l'une quelconque des revendications précédentes, **caractérisé en ce qu'**un cadre de fixation est monté sur la construction en portique ou en console (12), lequel cadre de fixation fixe la position de différents modules de revêtement (9, 23, 24, 25) les uns par rapport aux autres et est réglable à une certaine distance de la pièce (15) par un réglage en hauteur (22).

10. Dispositif selon l'une quelconque des revendications précédentes, **caractérisé en ce qu'**un dispositif, constitué d'un dispositif d'enroulement (23), d'une poulie de renvoi (25) et d'un rouleau de contre-collage (9), est monté sur la construction en portique ou en console (12) et produit en mode de fonctionnement stationnaire une tension de bande dans le matériau de revêtement (11).

11. Dispositif selon l'une quelconque des revendications précédentes, **caractérisé en ce qu'**un dispositif de séparation (24) est monté sur la construction en portique ou en console (12) et sépare le matériau de revêtement (11) en mode de fonctionnement stationnaire lorsque le point de contact C juste avant l'arête avant de la pièce (15) est atteint.

12. Dispositif selon l'une quelconque des revendications précédentes, **caractérisé en ce qu'**il comporte au moins une baguette d'ancrage (16) ainsi que plusieurs points d'ancrage fixés et dispositifs d'arrêt (17) avec lesquels, lors du déplacement continu, la construction en portique ou en console (12) est bloquée dans l'une des positions autorisées sur la baguette d'ancrage (16) et la dimension longitudinale de la zone d'admission et de la zone d'enveloppement (8) est ainsi modifiée, les points d'ancrage sur la baguette d'ancrage (16) étant agencés de préférence de telle sorte que l'axe de rotation du rouleau de contre-collage (9) soit toujours positionné perpendiculairement au-dessus de l'axe de rotation d'une roue transporteuse du dispositif de transport (7).

13. Procédé de revêtement de pièces (15), allongées en forme de barres, avec au moins un matériau de revêtement (11), **caractérisé en ce que**
- pour au moins une pièce, un mouvement relatif entre la pièce (15) et au moins une unité de revêtement (8, 9, 10) est réalisé par au moins une construction en portique ou en console (12) qui est déplaçable par rapport à la pièce (15) au moyen d'un dispositif de déplacement (3, 5) et sur laquelle au moins une unité de revêtement (8, 9, 10) est montée, ce qui est aussi appelé mode de fonctionnement stationnaire, et
- pour au moins une deuxième pièce, le mouvement relatif entre une pièce (15) fixée dans une position définie et au moins une unité de revêtement (8, 9, 10) est réalisé par un dispositif de transport (6, 7), qui déplace la pièce par rapport à l'unité de revêtement (8, 9, 10), ce qui est aussi appelé mode de fonctionnement continu, le procédé étant mis en oeuvre sur un dispositif selon l'une quelconque des revendications 1 à 12.

14. Procédé selon la revendication 13, **caractérisé en ce que** l'application de l'agent adhésif sur le matériau de revêtement (11) et/ou l'assemblage du matériau de revêtement (11) et de la surface d'une pièce (15) sont commandés de telle sorte que le départ de la couche d'agent adhésif sur le matériau de revêtement et l'arrivée au point de contact C, où se situe le départ de la surface à revêtir de la pièce (15) coïncident et/ou qu'une précontrainte soit produite pour le transport du matériau de revêtement (11) jusqu'à la surface à revêtir.
